# FASCICULE DE BREVET EUROPEEN

(11) **EP 3 793 132 B1**
(45) Date de publication et mention de la délivrance du brevet: **22.12.2021**
(21) Numéro de dépôt: 20195133.2
(22) Date de dépôt: 08.09.2020
(51) Int. Cl.: H04L 12/12, H04L 12/40

(54) **COMMUNICATION PAR BUS CAN**
KOMMUNIKATION ÜBER CAN-BUS
CAN BUS COMMUNICATION

(30) Priorité: 10.09.2019 FR 1909970
(43) Date de publication de la demande: 17.03.2021
(73) Titulaire: STMicroelectronics (Grenoble 2) SAS, 38000 Grenoble (FR)
(72) Inventeur: DEHAMEL, Arnaud, 38650 MONESTIER DE CLERMONT (FR)
(74) Mandataire: Cabinet Beaumont

(56) Documents cités:
- EP-A2- 1 253 521
- US-A1- 2012 271 975
- Magnus-Maria Hell: "The new wake-up pattern for a robust system", Proceedings iCC 2017, 7 mars 2017 (2017-03-07), XP055673692, Extrait de l'Internet: URL:https://www.can-cia.org/fileadmin/reso urces/documents/proceedings/2017_hell.pdf [extrait le 2020-03-04]

## Description

### Domaine technique

La présente description concerne de façon générale les dispositifs électroniques, et en particulier un dispositif destiné à être relié à un bus série.

### Technique antérieure

Certaines applications, notamment dans l'automobile, comprennent de nombreux dispositifs, tels que des calculateurs, des capteurs, etc., reliés entre eux par un bus série tel qu'un bus CAN. Les dispositifs communiquent entre eux par le bus CAN. Par rapport à d'autres liaisons de communication, la liaison par bus CAN permet de réduire le nombre des câbles utilisés.

Le document US 2012/271975 décrit une définition de messages de bus de réveil pour réseau partiel.

Le document XP055673692 décrit un motif de réveil pour système robuste.

Le document EP 1 253 521 décrit un procédé et un dispositif de signalisation entre des dispositifs d'un système mémoire.

### Résumé de l'invention

Un mode de réalisation pallie tout ou partie des inconvénients des dispositifs connus destinés à être reliés à un bus série.

Un mode de réalisation permet de synchroniser des communications entre dispositifs reliés à un bus CAN ayant des horloges différentes.

Un mode de réalisation simplifie la fabrication des dispositifs connus destinés à être reliés à un bus série.

Un mode de réalisation pallie tout ou partie des inconvénients des procédés connus de communication par bus CAN.

Un mode de réalisation réduit la consommation d'énergie des dispositifs connus destinés à être reliés à un bus série.

Un mode de réalisation pallie tout ou partie des inconvénients des systèmes connus comprenant des dispositifs reliés à un bus série.

Un mode de réalisation simplifie la fabrication des systèmes connus comprenant des dispositifs reliés à un bus série.

Un mode de réalisation réduit la consommation d'énergie des systèmes connus comprenant des dispositifs reliés à un bus série.

Selon un premier aspect, non couvert par les revendications, un mode de réalisation prévoit un procédé comprenant les étapes de :
recevoir des fronts transportés par un bus série et séparés par des multiples d'une même durée ;
déterminer une valeur de mesure d'un rapport entre un temps de cycle d'une horloge et ladite durée ;et
envoyer des bits sur le bus série en utilisant ladite valeur de mesure.

Selon un mode de réalisation, la réception des fronts a lieu avant l'envoi des bits.

Selon un mode de réalisation, le procédé comprend la réception de données en utilisant ladite valeur de mesure, lesdits fronts comprenant des fronts entre des bits des données reçues.

Selon un mode de réalisation, le procédé comprend l'envoi d'un accusé de réception des données en utilisant ladite valeur de mesure.

Selon un mode de réalisation, la détermination de la valeur de mesure comprend l'utilisation d'une valeur stockée, de préférence maintenue fixe pendant l'envoi des bits.

Selon un mode de réalisation, la détermination de la valeur de mesure comprend l'ajout à la valeur stockée d'une valeur prédéfinie et/ou d'une valeur calculée en fonction d'une température.

Selon un mode de réalisation, ladite valeur calculée est extrapolée à partir de plusieurs couples prédéfinis comprenant chacun une valeur de température et une valeur correspondant à ladite valeur calculée pour ladite valeur de température.

Selon un mode de réalisation, la détermination de la valeur de mesure comprend :
la détermination d'une première valeur représentative d'une somme d'écarts entre ladite valeur de mesure et une valeur réelle dudit rapport pour les cycles de l'horloge compris entre la réception de deux desdits fronts ; et
le retrait de la première valeur représentative à ladite valeur stockée.

Selon un mode de réalisation, le procédé comprend, à chaque cycle de l'horloge, l'addition modulo un entier au contenu d'un registre d'une deuxième valeur représentative de ladite valeur de mesure, la détermination de la première valeur représentative étant basée sur une différence de contenu dudit registre entre des instants de réception desdits deux desdits fronts.

Selon un mode de réalisation, l'envoi de chacun desdits bits débute à un instant où le contenu dudit registre franchit un seuil.

Selon un mode de réalisation, le maintien fixe de la valeur stockée est mis en oeuvre par un multiplexeur fournissant la valeur stockée, une entrée parmi plusieurs entrées du multiplexeur recevant la valeur stockée, ladite entrée parmi plusieurs entrées étant sélectionnée pendant l'envoi des bits.

Un mode de réalisation prévoit un dispositif configuré pour mettre en oeuvre un procédé tel que défini ci-dessus.

Selon un mode de réalisation, le dispositif est destiné à être connecté au bus série et comprend ladite horloge, ladite horloge étant de préférence située dans et sur un substrat semiconducteur.

Selon un mode de réalisation, le dispositif est configuré pour avoir un état de sommeil et un état de réveil, et pour qu'un passage de l'état de sommeil à l'état de réveil soit déclenché par une trame transportée par le bus série, ladite trame comprenant au moins deux cycles consécutifs d'un état dominant suivi d'un état récessif, lesdits états récessifs et dominants ayant d'autres durées comprises entre 2 et 5 fois ladite durée.

Une mode de réalisation prévoit un système comprenant un bus série et un ou plusieurs premiers dispositifs tels que définis ci-dessus, reliés au bus série.

Selon un mode de réalisation, le système comprend, relié au bus en série, un deuxième dispositif configuré pour envoyer :
des premiers messages véhiculant un ensemble d'étapes à effectuer par les premiers dispositifs ; et
des deuxièmes messages adressés à une partie des premiers dispositifs, les deuxièmes messages véhiculant des identifiants respectifs des premiers dispositifs auxquels les deuxièmes messages sont adressés, les deuxièmes messages demandant aux premiers dispositifs auxquels les deuxièmes messages sont adressés d'envoyer des réactions respectives au deuxième dispositif dans des intervalles de temps attendus respectifs,
les premiers dispositifs étant configurés pour : recevoir les premiers messages, lire l'ensemble d'étapes à effectuer, et
mettre en oeuvre des étapes en fonction de l'ensemble lu ; et recevoir les deuxièmes messages, et réagir au deuxièmes messages par l'envoi sur le bus, dans les intervalles de temps attendus respectifs, de réactions à destination du deuxième dispositif.

Selon un deuxième aspect, un mode de réalisation prévoit un procédé selon la revendication 1.

D'autres modes particulièrement avantageux de réalisation liés à ce deuxième aspect sont définis dans les revendications 2 à 14.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente, de manière schématique, un système comprenant un bus série et des dispositifs reliés au bus, auquel s'appliquent les modes de réalisation décrits ;
la figure 2 représente, de manière schématique, un exemple de circuit d'un dispositif auquel s'appliquent les modes de réalisation décrits ;
la figure 3 représente, de manière partielle et schématique, un mode de réalisation, selon un premier aspect, d'un dispositif destiné à être relié à un bus série ;
la figure 4 représente, de manière schématique, un mode de réalisation d'un circuit du dispositif de la figure 3 ;
la figure 5 représente, par des chronogrammes schématiques, le fonctionnement du circuit de la figure 4 ;
la figure 6 représente, de manière schématique, un mode de réalisation d'un autre circuit du dispositif de la figure 3 ;
la figure 7 représente, par des chronogrammes schématiques, le fonctionnement du circuit de la figure 6 ;
la figure 8 représente, de manière schématique, un autre mode de réalisation d'un circuit du dispositif de la figure 3 ;
la figure 9 représente, de manière schématique, un autre mode de réalisation d'un autre circuit du dispositif de la figure 3 ;
la figure 10 représente, de manière schématique, un mode de réalisation d'un circuit du circuit de la figure 9 ;
la figure 11 représente, de manière schématique, un mode de réalisation d'un circuit du dispositif de la figure 3 ;
la figure 12 représente, de manière schématique, un mode de réalisation d'un circuit du circuit de la figure 11 ;
la figure 13 représente, de manière partielle et schématique, un mode de réalisation selon un deuxième aspect d'un dispositif destiné à être relié à un bus série ; et
la figure 14 représente, par des chronogrammes schématiques, une étape d'un mode de mise en oeuvre d'un procédé de communication par un bus série auquel est relié le dispositif de la figure 13.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, des unités de transmission et de réception (en anglais "transceiver unit"), ainsi que des unités de traitement de données (en anglais "data processing unit") ne sont pas représentées, les modes de réalisation décrits étant compatibles avec les unités connues de transmission et de réception et les unités connues de traitement de données.

Sauf précision contraire, lorsque l'on fait référence à deux éléments connectés entre eux, cela signifie directement connectés sans éléments intermédiaires autres que des conducteurs, et lorsque l'on fait référence à deux éléments reliés ou couplés entre eux, cela signifie que ces deux éléments peuvent être connectés ou être reliés ou couplés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

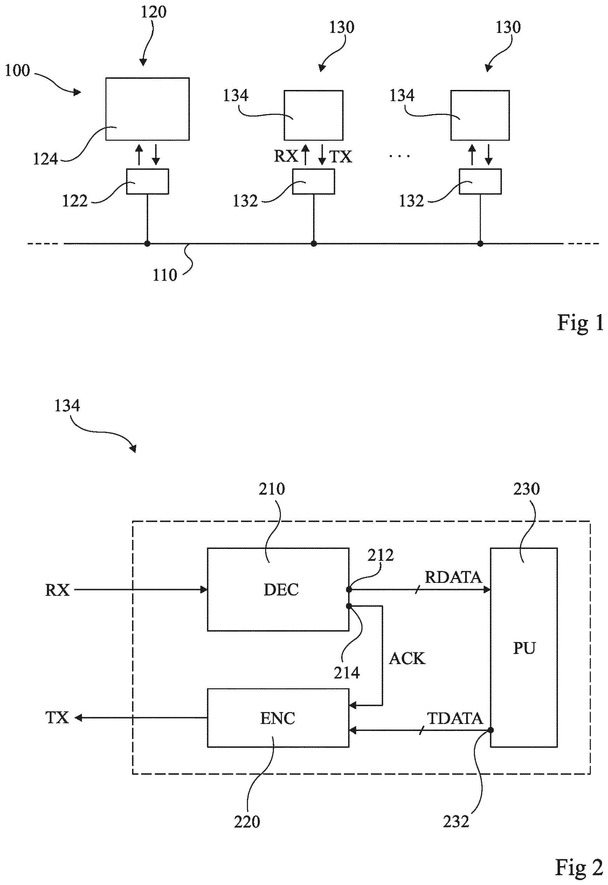

La figure 1 représente, de manière schématique, un système 100, comprenant un bus série 110, un dispositif 120 et plusieurs dispositifs 130. Les modes de réalisation décrits s'appliquent à un système tel que le système 100. Bien que plusieurs dispositifs 130 soient représentés, les modes de réalisation décrits sont compatibles avec un seul dispositif 130.

Le bus série 110 est typiquement défini par deux fils conducteurs. De préférence, le bus 110 est de type CAN, typiquement défini par la norme ISO 11898. Plus préférentiellement, le bus CAN est de type CAN à débit de données flexible FD CAN ("Flexible Data rate CAN").

Les dispositifs 120, 130 sont reliés, de préférence connectés, au bus 110. En fonctionnement, les dispositifs 120 et 130 communiquent des données entre eux par le bus 110. Pour cela, les dispositifs envoient et/ou reçoivent des données transportées par le bus 110. De préférence, pour transmettre des données, chaque dispositif envoie une ou plusieurs trames. Par trame, on entend une succession de bits disposés selon un ordre prédéfini. Chaque trame comprend de préférence au moins un bit de début de trame et plusieurs bits de fin de trame. Les bits des données (ou informations) transmises entre dispositifs sont constitués par certains des bits de la trame. Chaque bit correspond à un niveau logique du bus pendant une durée TCAN (non représentée en figure 1). Par niveaux logiques, on entend deux niveaux de potentiel du bus 110, préférentiellement correspondant à des états respectifs récessif et dominant du bus CAN 110. La durée TCAN est typiquement comprise entre environ 0,1 et 2 µs, par exemple égale à 1 µs, ce qui correspond à un débit de données inférieur à environ 10 Mbits/s, par exemple égal à 1 Mbits/s.

De préférence, le procédé de communication mis en oeuvre par le système 100 est orchestré par le dispositif 120, appelé dispositif maître. Les dispositifs 130 sont alors appelés dispositifs esclaves. En particulier, chaque dispositif esclave 130 envoie des données sur le bus seulement après avoir reçu d'autres données, envoyées par le dispositif maître, lui indiquant qu'il peut, ou doit, envoyer des données. De préférence, chaque dispositif esclave 130 envoie ses données seulement dans un intervalle de temps indiqué par le dispositif maître 120. Le dispositif maître fait en sorte qu'un seul dispositif 120, 130 à la fois envoie des données sur le bus. Ainsi, les priorités de transmission sont gérées seulement par le dispositif maître 120.

De préférence, les dispositifs 120 et 130 mettent en oeuvre un procédé tel que décrit dans la demande de brevet italien numéro 102018000003980 (17-GRA-0844).

Un tel procédé de communication comprend l'envoi par le dispositif maître 120 :
- de premiers messages véhiculant un ensemble d'étapes à effectuer par les dispositifs esclaves 130 ; et
- de deuxièmes messages adressés à une partie des dispositifs esclaves 130, ces deuxièmes messages véhiculant des identifiants respectifs des dispositifs esclaves 130 auxquels les deuxièmes messages sont adressés. Les deuxièmes messages demandent aux dispositifs esclaves 130 auxquels ils sont adressés d'envoyer des réactions respectives au dispositif maître 120 dans des intervalles de temps attendus respectifs.

Ce procédé de communication comprend en outre la mise en oeuvre par les dispositifs esclaves 130 de :
- la réception des premiers messages, la lecture de l'ensemble d'étapes à effectuer, et la mise en oeuvre d'étapes en fonction de l'ensemble lu ; et
- la réception des deuxièmes messages, et la réaction au deuxièmes messages par l'envoi sur le bus, dans les intervalles de temps attendus respectifs, de réactions à destination du dispositif maître 120.

Chaque dispositif 120, 130 comprend typiquement une unité, respectivement 122, 132, de transmission et de réception de données, et un circuit, respectivement 124, 134. Plus précisément, l'unité de transmission et de réception 122, 132 relie le circuit 124, 134 au bus 110. De préférence, l'unité de transmission et de réception 122, 132 est connectée au circuit 124, 134 et au bus 110, c'est-à-dire que l'unité 122, 132 connecte le circuit 124, 134 au bus 110. En fonctionnement, l'unité de transmission et de réception 122, 132 fournit au circuit 124, 134 un signal RX véhiculant les niveaux logiques du bus, par exemple le signal RX est à un niveau haut pour un état récessif du bus et à un niveau bas pour un état dominant du bus. Pour envoyer des données, le circuit 124, 134 envoie un signal TX véhiculant les niveaux logiques à appliquer au bus.

La figure 2 représente, de manière schématique, un exemple de circuit 134 d'un dispositif 130 tel que décrit en relation avec la figure 1, auquel s'appliquent les modes de réalisation décrits. Plus précisément, le dispositif 130 est destiné à être relié au bus 110, c'est-à-dire que le dispositif 130 définit un circuit configuré pour fonctionner lorsqu'il est relié au bus 110.

Le circuit 134 comprend un circuit 210 de décodage de données (DEC - decoder circuit). En fonctionnement, le circuit de décodage 210 reçoit le signal RX et fournit des données RDATA sur une sortie 212. Les données RDATA correspondent à des données transmises par le bus 110, typiquement des données extraites par le circuit de décodage 210 à partir d'une ou plusieurs trames transportées par le bus 110. De préférence, le circuit 210 fournit, sur une sortie 214, un accusé de réception ACK à la fin de chaque trame reçue.

Le circuit 134 comprend une unité de traitement de données 230 (PU). L'unité de traitement est reliée, de préférence connectée, à la sortie 212 du circuit de décodage 210. En fonctionnement, l'unité de traitement 230 reçoit les données RDATA et/ou fournit des données TDATA sur une sortie 232. L'unité de traitement 230 correspond à tout circuit usuel utilisant des données transmises par un bus et/ou fournissant des données à transmettre par un bus. L'unité de traitement 230 est typiquement configurée pour effectuer un traitement logique et/ou numérique des données. L'unité de traitement 230 peut en outre être reliée à un ou plusieurs capteurs et/ou actionneurs, non représentés. Dans un exemple préféré, l'unité de traitement 230 est reliée à des diodes électroluminescentes de feux à LED d'un véhicule. L'unité de traitement 230 permet de commander divers effets visuels des feux à LED. L'unité de traitement 230 peut comprendre un circuit de traitement séquentiel des données, tel qu'un microprocesseur.

Le circuit 134 comprend un circuit 220 d'encodage de données (ENC - encoder circuit). Le circuit d'encodage 220 est relié, de préférence connecté, à la sortie 232 de l'unité de traitement 230. De préférence, le circuit 220 est en outre relié, par exemple connecté, à la sortie 214. En fonctionnement, le circuit 220 reçoit les données TDATA et fournit le signal TX. De préférence, le circuit 220 encode les données à transmettre dans une ou plusieurs trames à appliquer au bus 110. De préférence, le circuit 220 reçoit l'accusé de réception ACK. Le circuit 220 envoie cet accusé de réception ACK sur le bus 110 en donnant au signal TX la ou les valeurs d'un ou plusieurs bits correspondant à l'accusé de réception ACK, par exemple à la fin de la trame reçue.

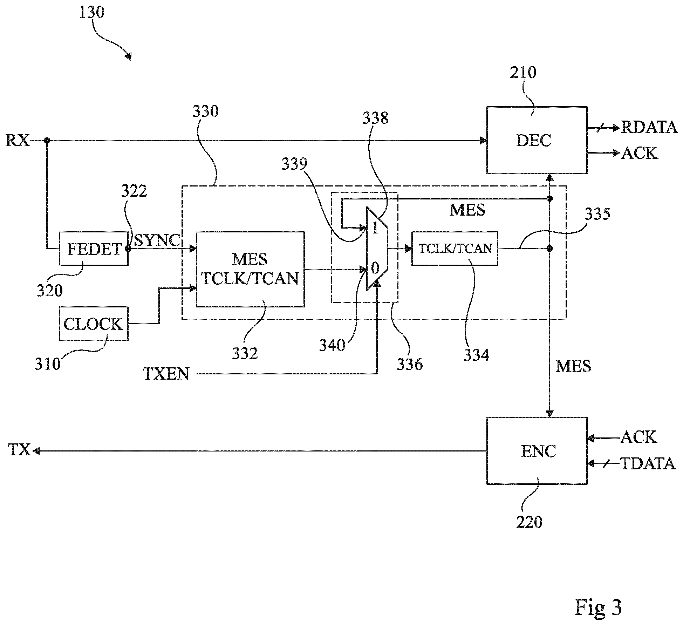

La figure 3 représente, de manière partielle et schématique, un mode de réalisation, selon un premier aspect, d'un dispositif 130 destiné à être relié à un bus CAN. En plus des éléments décrits en relation avec la figure 2, non décrits à nouveau, le dispositif 130 comprend une horloge 310 (CLOCK), un circuit de détection de front 320 (FEDET), et un circuit 330.

L'horloge 310 a préférentiellement un temps de cycle TCLK (non représenté), c'est-à-dire la durée d'un cycle de l'horloge 310, ou l'inverse de la fréquence de l'horloge 310, inférieur à la durée TCAN des bits transmis par le bus. Le temps de cycle est celui qui sépare les fronts montants successifs, ou les fronts descendants successifs, de l'horloge 310. Dans un exemple préféré, le temps de cycle de l'horloge 310 est de l'ordre de 32 fois plus petit que la durée TCAN.

Le circuit de détection de front 320 reçoit le signal RX, ou, en variante, un signal représentatif du niveau logique du bus. Le circuit de détection de front 320 est préférentiellement configuré pour détecter seulement les fronts descendants, c'est-à-dire les passages du niveau logique haut au niveau logique bas, ou de l'état récessif à l'état dominant du bus. En variante, le circuit de détection de front 320 est configuré pour détecter seulement les fronts montants ou les fronts montants et descendants. Cependant, par rapport à cette variante, un avantage de la détection des fronts descendants est qu'ils sont moins sensibles à des perturbations du bus que les fronts montants, permettant ainsi une détection plus précise.

Le circuit 320 fournit, sur une sortie 322, un signal SYNC. A chaque front détecté, le signal SYNC est par exemple mis à un niveau logique haut, par exemple pendant un cycle de l'horloge 310. Le signal SYNC reste alors à un niveau logique bas en dehors de ce cycle.

Les fronts détectés correspondent typiquement aux fronts entre bits d'une trame transportée par le bus en provenance d'un autre dispositif relié au bus, de préférence en provenance du dispositif maître 120. Entre deux fronts consécutifs reçus, la trame comprend un nombre entier de bits ayant la même durée TCAN. La durée TCAN est basée sur un temps de cycle d'horloge du dispositif à l'origine de la trame, de préférence le temps de cycle d'horloge du dispositif maître. Ainsi, les fronts reçus sont séparés de multiples de la durée TCAN, ou multiples entiers, c'est-à-dire que les temps séparant les fronts sont les résultats du produit de la même durée TCAN par des nombres entiers.

Le circuit 330 est relié, de préférence connecté, à la sortie 322 du circuit 320, et à l'horloge 310. En fonctionnement, le circuit 330 détermine une valeur de mesure d'un rapport TCLK/TCAN entre le temps de cycle TCLK de l'horloge 310 et la durée TCAN. Par valeur de mesure, on entend une valeur représentative du rapport TCLK/TCAN mesuré, c'est-à-dire du rapport TCLK/TCAN déterminé en fonctionnement à partir du signal CLK fourni par l'horloge 310 et à partir des instants de réception des fronts détectés, ou reçus, par le circuit 320. De préférence, une telle valeur représentative est formée, à une éventuelle constante près, d'une valeur liée au rapport TCLK/TCAN mesuré par un facteur d'échelle ou de proportionnalité. Dans l'exemple représenté, la valeur mesurée est obtenue en fonctionnement par un circuit de mesure 332 (MES TCLK/TCAN) compris dans le circuit 330.

Le circuit 330 a une sortie reliée, de préférence connectée, au circuit d'encodage 220. En fonctionnement, le circuit 330 fournit la valeur de mesure au circuit d'encodage 220. Le circuit d'encodage 220 utilise la valeur de mesure pour générer le signal TX correspondant aux bits envoyés par l'unité de réception et de transmission 132. Plus précisément, le circuit 220 détermine en fonction de la valeur de mesure les cycles d'horloge auxquels les bits des trames et/ou du ou des bits d'accusé de réception sont envoyés. Autrement dit, le circuit 220 détermine l'instant de début d'envoi de chaque bit en fonction de la valeur de mesure. La durée de chaque bit peut ainsi correspondre au temps séparant les instants de début d'envoi de bits consécutifs. Les instants de début d'envoi peuvent être déterminés de sorte que la durée de chaque bit corresponde au résultat d'une division du temps de cycle TCLK par le rapport TCLK/TCAN mesuré.

On a ainsi calibré, ou étalonné, le temps de cycle TCLK de l'horloge 310. Ainsi, la durée des bits envoyés par le dispositif 130 correspond à la durée TCAN. Ceci permet au dispositif destinataire de ces données, de préférence, le dispositifs maître 120, de recevoir correctement les données envoyées et/ou l'accusé de réception envoyé. Autrement dit, on a synchronisé la communication par le bus CAN de la communication entre le dispositif esclave 130 et le dispositif maître 120, ces dispositifs ayant des horloges différentes. En variante, la durée des bits envoyée peut être différente de la durée TCAN, par exemple un multiple ou un sous-multiple de la durée TCAN.

En outre, de préférence, l'horloge 310 peut être formée dans et sur un substrat semiconducteur, par exemple une portion de tranche (wafer) semiconductrice, préférentiellement en silicium. Autrement dit, l'horloge 310 peut être constituée de composants situés dans et sur le substrat. Ces composants peuvent comprendre des résistances et des condensateurs. Une telle horloge est plus simple à fabriquer qu'une horloge comprenant un cristal résonnant de type quartz. En particulier, une telle horloge peut être fabriquée par des mêmes étapes que les autres composants du dispositif 130. La fabrication du dispositif 130 est alors simplifiée par rapport à un dispositif comprenant une horloge à quartz. Notamment, ceci simplifie la fabrication du système 100 (figure 1).

Du fait que l'on a synchronisé la communication en utilisant la valeur de mesure du rapport TCLK/TCAN pour envoyer des bits de donnée et/ou d'accusé de réception, on évite des problèmes de désynchronisation liés à des variations de fréquence de l'horloge 310 du dispositif esclave 130. De telles variations peuvent être dues à des dispersions de fabrication et/ou au vieillissement, et/ou à la température de l'horloge 310, en particulier dans une horloge 310 située dans et sur un substrat de silicium.

De préférence, le circuit 330 comprend un circuit 334 (TCLK/TCAN) de stockage. Le circuit 334 stocke la valeur de mesure et fournit la valeur stockée MES sur une sortie 335. Selon un mode de réalisation représenté en figure 3, le circuit 334 est un circuit distinct du circuit de mesure 332. Le circuit 334 peut être un registre de bascules (flip-flop) commandées par le signal d'horloge CLK. Selon des modes de réalisation des figures suivantes, le circuit 334 est compris dans le circuit de mesure 332. Selon des modes de réalisation, le circuit 334 stocke une autre valeur représentative du rapport TCLK/TCAN, cette autre valeur permettant d'obtenir la valeur de mesure.

De préférence, le circuit 330 est configuré pour maintenir fixe la valeur stockée par le circuit 334. Autrement dit, le circuit 330 comprend un circuit 336 configuré pour que la valeur stockée par le circuit 334 ne soit pas modifiée pendant l'envoi des données. Ceci permet d'améliorer la synchronisation.

Selon un mode de réalisation, le circuit 336 comprend un multiplexeur 338 ayant sa sortie reliée, de préférence connectée, à une entrée du circuit 334. Le multiplexeur 338 a une entrée 339 reliée, de préférence connectée, à la sortie 335 du circuit 334. Le multiplexeur 338 a une autre entrée 340 qui, dans le mode de réalisation représenté, est reliée à la sortie du circuit de mesure 332.

En fonctionnement, le circuit 334 fournit la valeur stockée MES, par exemple la valeur de mesure du rapport TCLK/TCAN. Le multiplexeur reçoit un signal TXEN. L'entrée 339 est sélectionnée parmi les entrées 339 et 340 pendant l'envoi des données. Pour cela, le signal TXEN peut être un signal de commande mis à un niveau haut (niveau 1) pendant l'envoi des données et mis à un niveau bas (niveau 0) en dehors de l'envoi des données. Le signal TXEN peut également être tout type de signal de commande activé lors de l'envoi des données. Ainsi, pendant l'envoi des données, le circuit 334 reçoit la valeur stockée. Ceci permet de maintenir une valeur fixe stockée dans le circuit 334, en particulier lorsque le circuit 334 est un circuit remplaçant, à chaque cycle de l'horloge 310, tout ou partie de la valeur stockée par la valeur reçue. Bien que l'on ait décrit un mode de réalisation particulier des circuits 334 et 336, les circuits 334 et 336 peuvent être formés par tout circuit configuré pour stocker une valeur et pour maintenir inchangée cette valeur lorsque le signal TXEN est reçu.

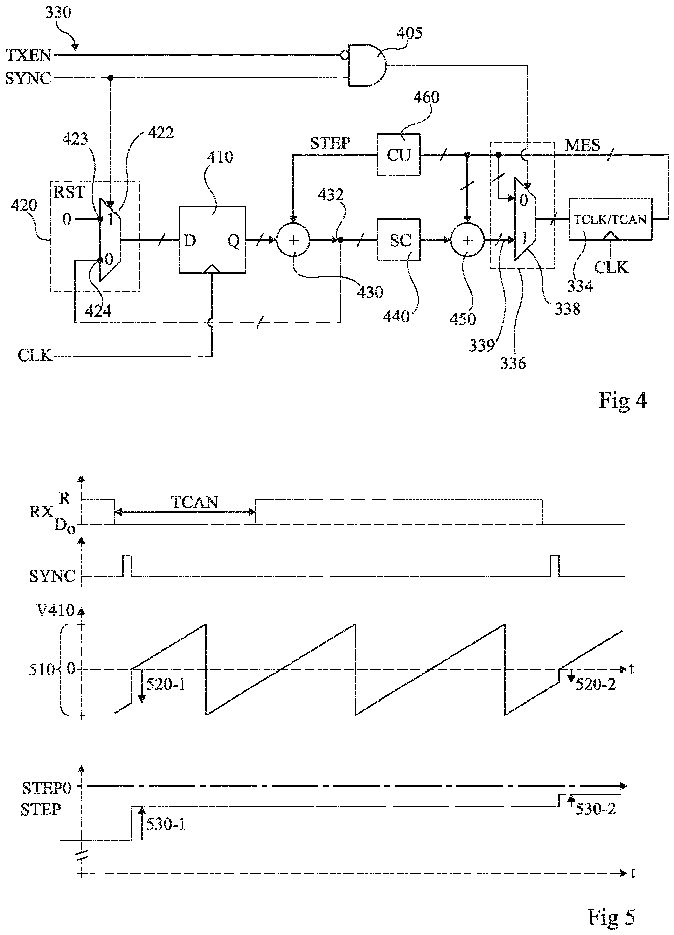

La figure 4 représente, de manière schématique, un mode de réalisation du circuit 330 du dispositif de la figure 3.

Dans ce mode de réalisation, le circuit de stockage 334 et le circuit 336 de maintien de la valeur stockée sont compris dans le circuit de mesure 332. Plus particulièrement, le signal de commande du circuit 336 de maintien de la valeur stockée est fourni par une porte logique ET 405. La porte logique ET 405 reçoit, sur une entrée inverseuse, le signal TXEN, et, sur une entrée non inverseuse, le signal SYNC. Dans l'exemple représenté d'un circuit de maintien 336 comprenant un multiplexeur 338, l'entrée 339 du multiplexeur est sélectionnée lorsque la porte logique ET fournit un niveau haut (1), et l'entrée 340 est sélectionnée sinon. Le circuit 334 est par exemple constitué de bascules commandées par le signal d'horloge CLK. La valeur stockée est une valeur représentative MES du rapport TCLK/CAN mesuré pouvant être différente de la valeur de mesure.

Outre les circuits 334 et 336, le circuit 330 comprend un registre 410. Le registre 410 est préférentiellement configuré pour avoir un contenu augmenté d'un pas (STEP) à chaque cycle de l'horloge 310 (figure 3). Ce contenu peut être constitué de la totalité du registre, ou plus préférentiellement, de bits de poids faible du registre. Plus précisément, le contenu est augmenté modulo deux puissance le nombre de bits du contenu considéré. Le pas STEP est préférentiellement une valeur représentative de la valeur de mesure du rapport TCLK/TCAN, par exemple constitue la valeur de mesure. De préférence, le pas STEP est fourni par un circuit de calcul 460 (CU) relié, de préférence connecté, à la sortie du circuit 334.

Dans un exemple préféré, le registre comprend vingt bits, et le contenu considéré correspond aux seize bits de poids les plus faibles du registre. Ainsi, à chaque cycle de l'horloge 310, le contenu est augmenté d'un pas STEP modulo 0x10000. Le préfixe "0x" signifie que les caractères suivants sont une notation hexadécimale.

De préférence, le registre 410 est constitué de bascules synchrones commandées par le signal d'horloge CLK. Le registre 410 a sa sortie (Q) reliée, de préférence connectée, à un circuit additionneur 430. Le circuit additionneur 430 reçoit en outre le pas STEP. Une sortie 432 du circuit additionneur 430 est reliée à une entrée (D) du registre 410, de préférence par l'intermédiaire d'un circuit 420 de mise à zéro (RST) du registre 410. Ceci permet de remplacer, à chaque cycle de l'horloge 310, le contenu du registre 410 par le résultat de l'addition par le circuit 430 du contenu du registre et du pas STEP. En variante, on peut utiliser tout circuit permettant d'ajouter, modulo un entier, un pas au contenu d'un registre à chaque cycle de l'horloge 310.

De préférence, le circuit de mise à zéro 420 du contenu du registre 410 comprend un multiplexeur 422. Le multiplexeur est commandé par un signal de commande de remise à zéro, ce signal de commande étant, dans un mode de réalisation, formé par la signal SYNC. Le multiplexeur 422 a une entrée 423 (1) sélectionnée lorsqu'une remise à zéro du registre 410 est commandée le signal SYNC. Par exemple, lorsque le signal SYNC est activé, c'est-à-dire à un niveau logique haut, l'entrée 423 est sélectionnée, c'est-à-dire que la sortie du multiplexeur prend la valeur de l'entrée 423 sélectionnée. Le multiplexeur a une autre entrée 424 (0) sélectionnée en dehors des remises à zéro. L'entrée 423 reçoit la valeur nulle comprenant les bits du registre à remplacer pour la remise à zéro. L'entrée 424 est reliée, de préférence connectée, à la sortie 432 du circuit additionneur 430. En variante, on peut remplacer le circuit de mise à zéro 420 par tout circuit d'initialisation/réinitialisation du contenu du registre 410 à une valeur prédéfinie pouvant être différente de zéro.

De préférence, un deuxième circuit additionneur 450 a une entrée reliée à la sortie du premier circuit additionneur 430, plus préférentiellement par l'intermédiaire d'un circuit 440 (SC). Le circuit additionneur 450 a une autre entrée recevant par exemple la valeur stockée MES. Le circuit additionneur 450 a sa sortie reliée à l'entrée du circuit 334, de préférence par l'intermédiaire du circuit 336. Par exemple, le circuit additionneur 450 est relié, de préférence connecté, à l'entrée 339 du multiplexeur 338.

La figure 5 représente, par des chronogrammes schématiques, un exemple de fonctionnement du circuit de la figure 4. Plus précisément, la figure 5 représente des chronogrammes d'un exemple du signal RX, du signal SYNC, des valeurs V410 du contenu considéré du registre 410, et de la valeur de mesure STEP, en fonction du temps t.

Dans cet exemple, le signal RX présente un premier front descendant, puis un état dominant (Dₒ) d'une durée d'un bit, puis un état récessif (R) d'une durée de deux bits qui se termine par un deuxième front descendant.

Le signal SYNC a un niveau logique haut pendant un cycle d'horloge après détection de chacun des fronts descendants. Le signal SYNC a un niveau logique bas lorsque qu'aucun front descendant n'est détecté.

Dans l'exemple représenté, afin de faciliter la compréhension, les valeurs V410 du contenu du registre 410 sont en représentation signée, c'est-à-dire que le bit de poids le plus fort du contenu considéré correspond au bit de signe. Les valeurs du registre 410 peuvent aussi être en représentation non signée. Dans l'exemple décrit ci-dessus d'un registre 410 de vingt bits et d'un contenu formé des 16 bits de poids les plus faibles, la valeur du bit numéro 15 (en commençant par 0 à partir du bit de poids le plus faible) correspond au bit de signe.

A chaque fois que le signal SYNC est au niveau haut, la valeur V410 est remise à zéro. La porte logique ET 405 permet d'utiliser le même circuit 336 pour maintenir fixe la valeur stockée MES pendant l'envoi de données et pendant la détermination de la valeur de mesure en dehors de la réception des fronts.

Après la remise à zéro, la valeur V410 augmente du fait de l'ajout du pas STEP à chaque cycle d'horloge. L'augmentation est représentée de manière très schématique sans faire apparaître les ajouts successifs. Du fait que l'addition du pas est modulo un entier, la valeur V410 balaye plusieurs fois une plage de valeurs 510. Le temps mis pour balayer une fois la plage de valeurs 510 est représentatif du résultat d'une division de la durée TCAN par le pas STEP.

Pour mesurer le rapport TCLK/TCAN, on cherche à donner au pas STEP, représentant la valeur de mesure du rapport TCLK/TCAN, une valeur STEPO représentative du rapport réel entre le temps de cycle TCLK et la durée TCAN. La valeur STEPO est de préférence celle pour laquelle la valeur V410 balaye exactement une fois la plage de valeurs 510 pendant la durée TCAN d'un bit. En effet, le rapport entre la valeur STEPO et l'étendue de la plage 510 est alors égal au rapport qu'il y a réellement, en fonctionnement, entre le temps de cycle TCLK de l'horloge 310 et la durée TCAN. En variante, la valeur STEPO peut correspondre au balayage de la plage exactement un nombre entier de fois. Le balayage peut en outre être effectué dans l'autre sens que celui représenté, la valeur STEPO étant négative.

Dans l'exemple représenté, la valeur V410 n'a pas balayé exactement trois fois la plage 510 pendant la durée de trois bits entre la réception du premier front et la réception du deuxième front. Plus précisément, au deuxième front, une valeur 520-2 de la somme du pas STEP et de la valeur V410 pendant le cycle d'horloge précédent la remise à zéro, a un résultat différent de zéro, ici une valeur négative. La valeur 520-2 correspond à l'accumulation d'un écart, pour les cycles d'horloge entre les premier et deuxième fronts, entre le pas STEP et la valeur STEPO. L'écart est une valeur algébrique, c'est-à-dire pouvant être positive ou négative. On a également représenté une valeur 520-1 correspondant à l'accumulation de l'écart pendant le temps séparant un front précédent, non représenté, et le premier front.

A chaque front reçu, la porte logique ET 405 commande l'arrêt du maintien de la valeur stockée dans le circuit 334. La valeur stockée est remplacée par la valeur que le circuit additionneur 450 fournit. La valeur fournie par le circuit 440 est de signe opposé à celui de la valeur 520-1, 520-2 reçue par le circuit 440. Ainsi, le circuit 450 retranche au pas STEP une valeur algébrique 530-1, 530-2 représentative de la valeur 520-1, 520-2. En variante, le circuit 450 est remplacé par un circuit soustracteur.

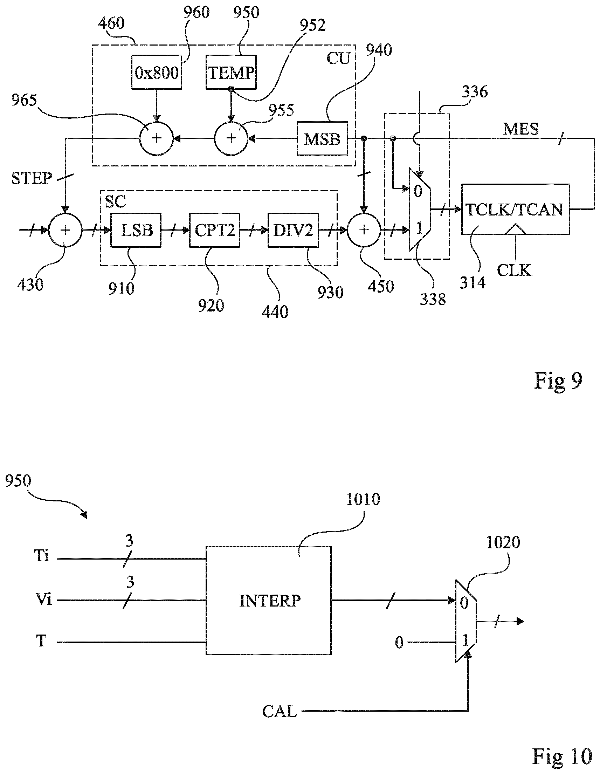

La valeur 530-1, 530-2 a le même signe que la valeur respective 520-1, 520-2. Plus précisément, la valeur 530-1, 530-2 fournie par le circuit 440 correspond à la somme 520-1, 520-2, multipliée par une constante choisie suffisamment petite pour que le retrait de la valeur 530-1, 530-2 diminue, en valeur absolue, l'écart entre le pas STEP et la valeur STEPO. En particulier, on prévoit le circuit 440 pour que cette constante diminue l'écart entre le pas STEP et la valeur STEPO lorsque les premier et deuxième fronts sont séparés d'une durée inférieure ou égale à celle de 10 fois la durée TCAN d'un bit. Un exemple d'un tel fonctionnement du circuit 440 est décrit ci-après en relation avec la figure 9. Du fait qu'une trame de bus CAN comprend au moins un front descendant tous les 10 bits, ceci permet de rapprocher progressivement le pas STEP de la valeur STEPO, comme ceci est représenté. Autrement dit, ceci permet de rapprocher progressivement la valeur de mesure du rapport TCLK/TCAN de la valeur réelle du rapport TCLK/TCAN.

En variante, on peut compter le nombre de cycles entre deux fronts, et déduire la valeur de mesure directement du rapport entre ce nombre de cycle et la durée moyenne d'un bit entre les deux fronts. Cependant par rapport à cette variante, le circuit de la figure 4 permet de déterminer facilement la valeur de mesure sans connaître à l'avance et/ou sans mesurer le nombre entier de durées séparant les fronts descendants consécutifs. En outre, par rapport à cette variante, le circuit de la figure 4 est plus robuste à d'éventuelles perturbations provoquant, par exemple, des fronts parasites ou des décalages des instants auxquels les fronts sont détectés.

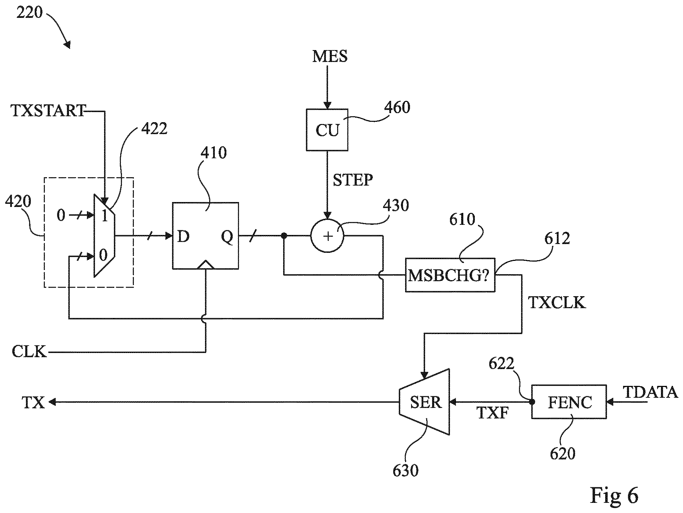

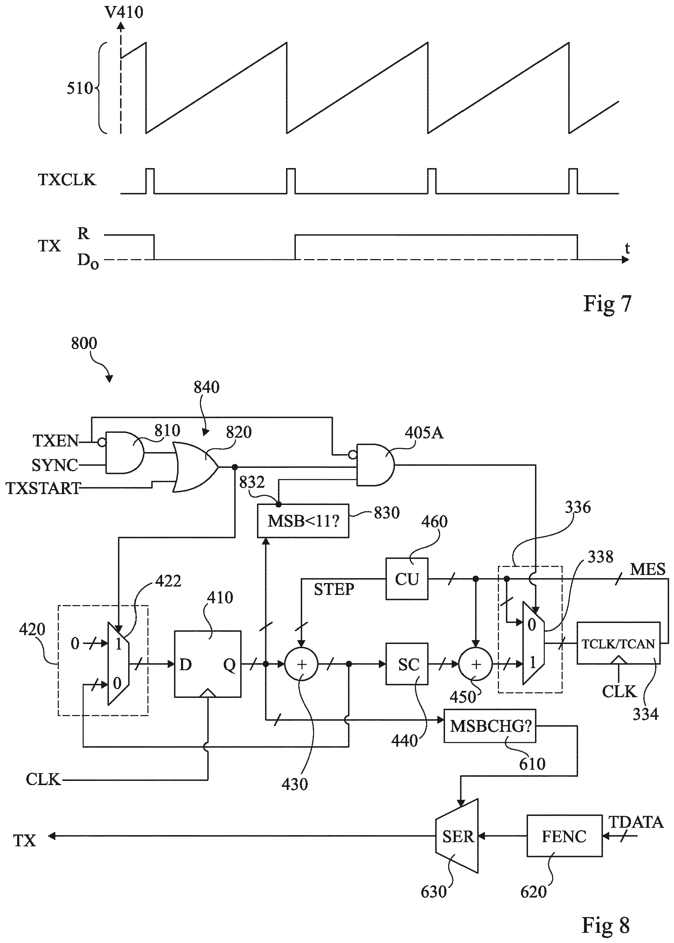

La figure 6 représente, de manière schématique, un mode de réalisation du circuit d'encodage 220 du dispositif de la figure 3. La figure 7 représente, par des chronogrammes schématiques, le fonctionnement du circuit de la figure 6.

Le circuit d'encodage 220 reprend des circuits identiques ou similaires au circuit de mise à zéro 420, au registre 410, au circuit additionneur 430 et au circuit de calcul 460 (CU), du circuit 330 de la figure 4, à la différence que le circuit de mise à zéro 420 est commandé par un signal TXSTART. Le signal TXSTART commande la mise à zéro du registre 410 par le circuit 420 pendant un cycle d'horloge au début de l'envoi d'une trame de données. Le circuit de mise à zéro 420, le registre 410, le circuit additionneur 430, et/ou le circuit de calcul 460 peuvent être distincts de ceux du circuit 330, ou, comme dans le mode de réalisation préféré de la figure 8 ci-après, communs avec ceux du circuit 330. La valeur V410 du contenu du registre en fonction du temps t est représentée schématiquement en figure 7.

Le circuit d'encodage 220 comprend en outre un circuit 610 (MSBCHG?) relié, de préférence connecté, à la sortie (Q) du registre 410. Le circuit 610 détecte le franchissement d'un seuil par le contenu du registre 410. Dans l'exemple préféré où le contenu correspond aux 16 bits de poids faibles d'un registre de 20 bits, ce franchissement correspond à un changement de valeur d'un des bits les plus significatifs MSB ("Most Significant Bits") du registre. Le seuil correspond ainsi, dans cet exemple, à une valeur nulle du contenu considéré. En variante, on peut utiliser toute valeur de seuil, choisi en fonction de la synchronisation et/ou d'une durée entre la commande de remise à zéro par le signal TXSTART et l'envoi de la trame. Un franchissement se produit à chaque balayage de la plage 510 par la valeur V410 du contenu considéré, les franchissements consécutifs sont séparés de la durée du balayage de la plage.

Le circuit 610 fournit un signal TXCLK sur sa sortie 612. Un exemple de signal TXCLK est représenté schématiquement en fonction du temps t en figure 7. De préférence, lorsque le franchissement est détecté, le signal TXCLK prend un premier niveau logique, par exemple un niveau haut, et reste à un niveau bas lorsqu'aucun signal n'est détecté. En variante, le signal TXCLK peut être constitué de tout signal permettant de transmettre une information d'un franchissement de seuil par le contenu du registre 410.

Le circuit 220 comprend en outre un circuit 620 (FENC) recevant les données TDATA. Le circuit 620 fournit à sa sortie 622 une trame TXF formée à partir des données TDATA, c'est à dire encode les données TDATA sous forme de la trame TXF. Le circuit 220 comprend en outre un circuit sérialiseur 630 (SER) relié, de préférence connecté, aux sorties 612 et 622. Le circuit 630 reçoit la trame TXF et met les données en série, synchronisées par le signal TXCLK. Le circuit 630 fournit le signal TX, représenté en figure 7, correspondant à des applications de niveaux récessifs (R) et dominants (Dₒ) au bus dans l'ordre des bits de la trame TXF. Chaque bit a la durée du balayage de la plage 510.

On a ainsi synchronisé l'envoi des bits envoyés par rapport à la durée TCAN des bits reçus auparavant. En particulier, le cas préféré où le dispositif 130 est un dispositif esclave et ne peut envoyer des données qu'après avoir reçu une trame de la part du dispositif maître 120 (figure 1), permet d'assurer que des donnés ont bien été reçues par le dispositif 130 avant l'envoi des données. De préférence, le temps entre, d'une part, la fin de la réception de la trame de données en provenance du dispositif maître permettant l'envoi des données par le dispositif esclave, et, d'autre part, le début l'envoi de la trame envoyée par le dispositif esclave, est inférieur à 100 fois la durée TCAN, plus préférentiellement inférieur à 20 fois la durée TCAN. Ceci permet d'assurer que des variations du temps de cycle entre la mesure du rapport TCLK/TCAN et l'utilisation de la valeur de mesure de ce rapport restent suffisamment faibles pour que la synchronisation soit suffisante pour assurer la bonne réception des données envoyées.

La figure 8 représente, de manière schématique, un mode de réalisation d'un circuit 800 du dispositif de la figure 3. Plus précisément, le circuit 800 comprend un circuit 330 identique ou similaire au circuit 330 de la figure 4, et un circuit 220 identique ou similaire au circuit 220 de la figure 6, dans lesquels les circuits de mise à zéro 420, le registre 410, le circuit additionneur 430 et le circuit de calcul 460 (CU) sont communs aux circuits 330 et 220.

Le circuit 800 comprend une porte logique ET 810 recevant, sur une entrée inverseuse, le signal TXEN. La porte logique ET 810 reçoit, sur une entrée non inverseuse, le signal SYNC. Une porte logique OU 820 a une entrée recevant le signal TXSTART et une entrée reliée, de préférence connectée, à la sortie de la porte logique ET 810. Le circuit de mise à zéro 420 est relié, de préférence connecté, à la sortie de la porte logique OU 820. La porte logique OU 820 fournit le signal de commande du circuit de mise à zéro 420.

Le circuit logique 840 constitué par les porte logiques ET 810 et OU 820 permet ainsi de commander la remise à zéro du registre 410 lorsque le signal TXSTART correspond au début d'un envoi d'une trame sur le bus, et de commander la remise à zéro du registre 410 lorsque le signal SYNC correspond à la détection d'un front descendant et que le signal TXEN ne correspond pas à un envoi d'une trame en cours. Le circuit logique 840 permet ainsi que le registre 410 soit commun pour l'envoi des trames et pour la détermination de la valeur de mesure du rapport TCLK/TCAN. Un avantage du présent mode de réalisation est alors que le circuit 800 comprend moins de composants, est plus compact et utilise moins de surface que les modes de réalisation dans lesquels les circuits 220 et 330 n'ont pas leurs composants en commun.

De préférence, la porte logique ET 405 du circuit 330 de la figure 4 est remplacée par une porte logique ET 405A. De même que la porte logique ET 405 du circuit 330 de la figure 4, la porte logique ET 405A :
reçoit le signal TXEN sur une entrée inverseuse ;
reçoit le signal SYNC, ici par l'intermédiaire des portes 810 et 820, sur une entrée non inverseuse ; et
commande le circuit 336.
La porte logique ET 405A comprend en outre une entrée non inverseuse supplémentaire reliée à une sortie 832 d'un circuit 830 (MSB<11?).

Le circuit 830 fournit, sur la sortie 832, un niveau haut lorsque le nombre de balayages de la plage de valeur du contenu du registre 410, considéré pour déterminer la valeur de mesure et pour envoyer les données, est inférieur ou égal à dix. Dans l'exemple préféré d'un registre 410 de vingt bits dont le contenu considéré correspond aux seize bits de poids faible, les quatre bits de poids les plus forts correspondent à ce nombre de balayages. On assure ainsi, pour déterminer la valeur de mesure, de ne pas prendre en compte des fronts descendants reçus séparés de plus de dix bits.

La figure 9 représente, de manière schématique, un mode de réalisation d'un circuit du dispositif de la figure 3. Plus précisément, le circuit représenté en figure 9 correspond à une partie d'un circuit 330 similaire ou identique à celui de la figure 4, comprenant les circuits additionneurs 430 et 450, le circuit de maintien 336, le circuit de stockage 314, et des modes de réalisation particuliers des circuits 440 (SC) et 460 (CU). Le circuit de stockage 314 est, selon le présent mode de réalisation, constitué par un registre, par exemple de dix-huit bits.

Le circuit 440 comprend, en série successivement du circuit additionneur 430 au circuit additionneur 450 :
- un circuit 910 d'extraction de contenu du registre 410, plus précisément des bits de poids faible LSB (Least Significant Bits), par exemple les seize bits de poids faible du registre 410 à vingt bits ;
- un circuit 920 qui fournit sur sa sortie l'opposé du contenu considéré du registre, plus précisément le circuit 920 fournit le complément à deux CPT2 ("Two's complement") des bits extraits par le circuit 910 ; et
- un circuit 930 de multiplication par une constante, permettant de rapprocher progressivement le pas STEP de la valeur STEPO de la manière décrite en relation avec la figure 5, préférentiellement une division par deux (DIV2) des seize bits de poids faible (c'est-à-dire un décalage à droite en conservant le bit de signe).

Le circuit de calcul 460 comprend, de préférence, un circuit 940 (MSB) d'extraction de bits de poids fort du registre 314. De préférence, le circuit 940 extrait les neuf bits de poids fort. Le circuit 940 est facultatif, cependant, par rapport à un mode de réalisation dans lequel ce circuit serait omis, le circuit 940 permet de réduire le nombre de bits du registre 410 tout en conservant une valeur stockée précise.

Le circuit de calcul 460 comprend, de préférence, un circuit 965 d'ajout d'une valeur prédéfinie 960, ou valeur constante. Dans l'exemple préféré dans d'un rapport égal à environ 32 entre la durée TCAN est le temps de cycle, la valeur prédéfinie 960 est plus préférentiellement égale à 0x800, c'est-à-dire 32 fois plus faible que l'étendue 0x10000 de la plage balayée par le contenu du registre 410 utilisé pour déterminer la valeur de mesure. La valeur 960 peut être choisie d'une manière similaire pour d'autres valeurs du rapport entre la durée TCAN et le temps de cycle TCLK.

Ainsi, de préférence, le circuit 460 de calcul du pas STEP à partir de la valeur stockée MES ajoute la valeur prédéfinie 960 à la valeur stockée. Par rapport à des modes de réalisation dans lesquels le circuit 965 est omis, ceci permet de faciliter l'obtention d'une valeur de départ du pas STEP proche de la valeur réelle STEPO du rapport TCLK/TCAN. En variante, le circuit 965 peut être remplacé par un circuit d'initialisation à une valeur non nulle de la valeur stockée MES.

Le circuit de calcul 460 comprend, de préférence, un circuit additionneur 955 relié, de préférence connecté, à une sortie 952 d'un circuit 950 (TEMP). Le circuit 950 fournit sur sa sortie 952 une valeur calculée en fonction de la température du dispositif 130. La valeur calculée correspond à une différence entre le rapport TCLK/TCAN à la température de fonctionnement du dispositif 130 et le rapport TCLK/TCAN à une température de référence.

Le circuit additionneur 955 peut avoir sa sortie connectée à l'entrée du circuit 965, comme ceci est représenté. Le circuit 955 ajoute ainsi une valeur calculée par le circuit 950 à la valeur stockée MES, préférentiellement aux bits de poids forts de la valeur stockée. En variante, les circuits additionneurs 955 et 965 peuvent être échangés, le circuit additionneur 955 ajoutant alors la valeur fournie par le circuit 950 à la somme de la valeur 960 et des bits de poids fort de la valeur stockée.

Ainsi, de préférence, le circuit 460 de calcul du pas STEP à partir de la valeur stockée MES ajoute à la valeur stockée la valeur fournie par le circuit 950. Par rapport à des modes de réalisation dans lesquels les circuits 950 et 955 sont omis, ceci permet à la valeur de mesure de rester plus proche de la valeur réelle du rapport TCLK/TCAN lorsque la température varie, notamment en l'absence de réception de fronts et/ou pendant l'envoi de trames de données.

La figure 10 représente, de manière schématique, un mode de réalisation du circuit 950 du circuit de la figure 9.

A titre d'exemple, le circuit 950 comprend un circuit 1010 (INTERP) recevant une valeur de température mesurée T, trois valeurs de température Ti et trois valeurs Vi associées respectivement aux valeurs Ti. Autrement dit, le circuit 1010 reçoit trois couples prédéfinis comprenant chacun une des valeurs Ti et la valeur Vi associée, ou correspondante. Pour chaque valeur Ti, la valeur Vi associée constitue par exemple la valeur calculée par le circuit 950 lorsque la température mesurée T est égale à la valeur Ti. Lorsque la température mesurée T est différente des valeurs Ti, la valeur calculée est extrapolée à partir des valeurs de température Ti et des valeurs Vi associées. De préférence, le circuit 1010 réalise une interpolation, plus préférentiellement linéaire, à partir des valeurs Ti et Vi.

Cet exemple n'est pas limitatif, le nombre de couples de valeurs Ti et Vi peut prendre toute valeur entière supérieure à deux, et la valeur calculée par le circuit 950 peut alors être extrapolée de toute manière usuelle à partir des couples.

De préférence, la sortie du circuit 1010 est reliée au circuit additionneur 955 par l'intermédiaire d'un multiplexeur 1020. Le multiplexeur a une entrée (0) reliée, de préférence connectée, à la sortie du circuit interpolateur 1010. Le multiplexeur a une autre entrée (1) recevant une valeur nulle. Le multiplexeur 1020 a sa sortie reliée, de préférence connectée, au circuit additionneur 955. Le multiplexeur 1020 est commandé par un signal CAL. Le multiplexeur permet, lorsque le signal CAL commande la sélection de l'entrée de recevant la valeur nulle, d'utiliser le dispositif pour obtenir les valeurs Vi à partir des valeurs de mesure du rapport TCLK/TCAN, sans utiliser le circuit 1010. On a ainsi calibré les valeurs Vi. Après calibration, on peut alors fournir les valeurs Vi au circuit 1010.

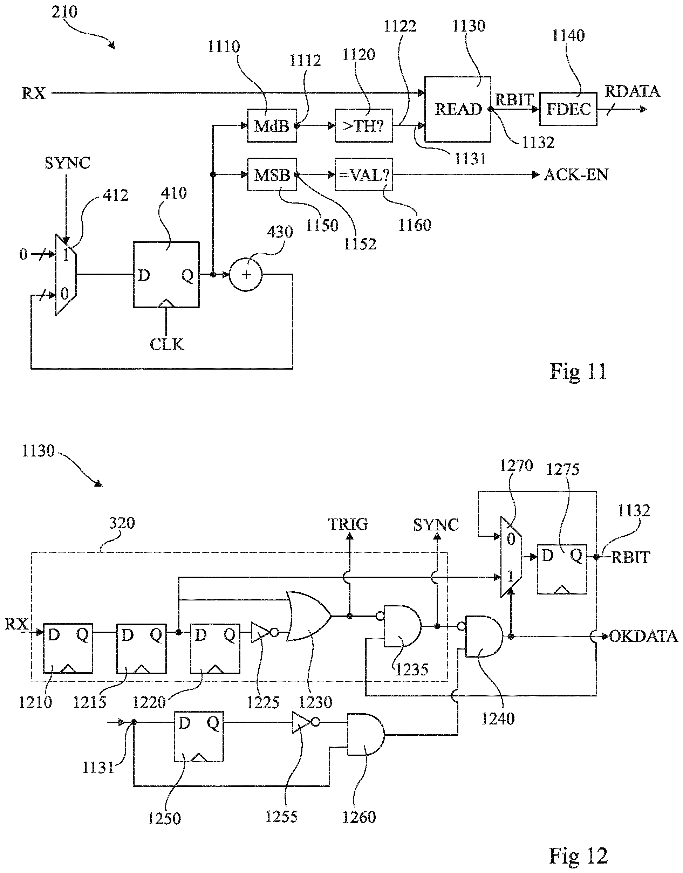

La figure 11 représente, de manière schématique, un mode de réalisation du circuit de décodage 210 du dispositif de la figure 3.

Le circuit de décodage 210 reprend des circuits identiques ou similaires aux circuits de mise à zéro 420, au registre 410, au circuit additionneur 430 du circuit 330 de la figure 4. Le circuit de mise à zéro 420, le registre 410, le circuit additionneur 430, et/ou le circuit de calcul 460 peuvent être distincts de ceux du circuit 330, ou de préférence, communs avec ceux du circuit 330. Le registre 410 a un contenu représentant tout ou partie du registre 410, ce contenu balayant répétitivement une plage de valeurs d'une manière similaire à celle décrite en relation avec la figure 5 en utilisant la valeur de mesure.

Le circuit de décodage 210 comprend, de préférence, un circuit 1110 (MdB) relié, de préférence connecté, à la sortie Q du registre 410. Le circuit 1110 extrait des bits de poids fort du contenu du registre 410 constitué de préférence des 16 bits de poids faible du registre 410 de vingt bits. De préférence, le circuit extrait cinq bits, ces bits ayant plus préférentiellement les numéros 11 à 15. La valeur numérique correspondant aux bits extraits est fournie sur une sortie 1112 du circuit 1110.

Le circuit de décodage 210 comprend un circuit 1120 (>TH?) relié, de préférence connecté, à la sortie 1112 du circuit 1110. Le circuit 1120 détecte le franchissement d'un seuil TH par le contenu du registre 410. De préférence, le circuit détecte le franchissement du seuil TH par la valeur fournie par le circuit 1110. Le seuil TH est choisi pour que le franchissement du seuil se produise après le début de chaque balayage par la valeur V410 (figure 5) du contenu du registre 410 avec un délai donné entre le début et l'instant de franchissement du seuil. Le circuit 1120 fournit, sur sa sortie 1122, un signal de détection de franchissement du seuil.

Le circuit de décodage 210 comprend un circuit 1130 (READ) recevant le signal RX et ayant une entrée 1131 reliée, de préférence connectée, à la sortie 1122. Le circuit 1130 lit le niveau logique du signal RX à chaque franchissement du seuil TH par la valeur V410. Le circuit 1130 fournit la valeur lue, correspondant à un bit RBIT, sur sa sortie 1132. Les bits RBIT sont préférentiellement ceux d'une trame comprenant les fronts descendants permettant de déterminer la valeur de mesure.

Le circuit de décodage 210 comprend en outre un circuit 1140 (FDEC) décodeur de trame. Le circuit 220 extrait les données RDATA à partir de la succession des bits RBIT de la trame. On a ainsi utilisé la valeur de mesure du rapport TCLK/TCAN pour recevoir les données. Il en résulte une meilleure synchronisation de la réception des données qu'en l'absence d'utilisation de la valeur de mesure.

Le circuit de décodage 210 comprend, de préférence, un circuit 1150 (MSB) relié, de préférence connecté, à la sortie Q du registre 410. Le circuit 1150 extrait des bits de poids fort du registre, de préférence des bits différents de ceux du contenu utilisé pour déterminer la valeur de mesure du rapport TCLK/TCAN. De préférence, les bits extraits correspondent aux quatre bits de poids les plus forts du registre de vingt bits 410. Ces bits représentent un nombre entier augmenté de 1 à chaque balayage de la plage de valeurs par le contenu des bits de poids faible. Autrement dit, ces bits comptent le nombre de balayage depuis le début de la trame, et ce nombre correspond à la position du bit reçu dans la trame. La position du bit est fournie par le circuit 1150 sur sa sortie 1152.

Le circuit de décodage 210 comprend un circuit 1160 (=VAL?) relié, de préférence connecté, à la sortie 1152 du circuit 1150. Le circuit 1160 compare la position du bit reçu dans la trame à une valeur prédéfinie. Lorsque la position et la valeur sont égales, le circuit 1160 émet un signal ACK-EN. Le signal ACK-EN est par exemple utilisé avec le signal TXCLK (figure 7) pour obtenir un accusé de réception ACK à envoyer sur le bus par le circuit 220 (figure 2). On a ainsi utilisé la valeur de mesure du rapport TCLK/TCAN pour émettre l'accusé de réception ACK. Il en résulte une meilleure synchronisation que si l'accusé de réception étant envoyé sans utiliser cette valeur.

La figure 12 représente, de manière schématique, un mode de réalisation du circuit 1130 du circuit 210 de la figure 9. En particulier, le circuit 1130 comprend des bascules synchronisées par le signal d'horloge CLK, non représenté.

Le circuit 1130 comprend trois bascules successives 1210, 1215, 1222 en série, la bascule 1210 recevant le signal RX sur son entrée D. La bascule 1220 a sa sortie Q reliée par un inverseur 1225 à une entrée d'une porte logique OU 1230. La porte logique OU 1230 a une autre entrée reliée, de préférence connectée, à la sortie Q de la bascule 1215 et à l'entrée de la bascule 1220. La sortie de la porte OU 1230 est reliée, de préférence connectée, à une entrée inverseuse d'une porte logique ET 1235. La porte logique ET 1235 a une entrée non inverseuse reliée, de préférence connectée, à la sortie 1132 du circuit 1130. De préférence, les bascules 1210, 1215, 1220, l'inverseur 1225, et les portes logiques 1230 et 1235 sont communs avec le circuit de détection de front 320 (figure 3), le signal SYNC étant fourni par la porte logique ET 1235.

De préférence, le circuit 320 fournit en outre un signal TRIG. Le signal TRIG est fourni par la porte logique OU 1230 dans le présent mode de réalisation. Le signal TRIG est préférentiellement utilisé combiné avec le signal d'horloge CLK pour commander le balayage de la plage de valeurs par le registre 410 uniquement lors des réceptions et envois de données. On évite ainsi avantageusement une partie de la consommation d'énergie par le registre 410 en dehors de l'envoi et de la réception de données.

Le circuit 1130 comprend en outre une bascule 1250 dont l'entrée D est reliée, de préférence connectée, à l'entrée 1131 du circuit 1130. La sortie Q de la bascule 1250 est reliée, de préférence connectée, à une entrée d'un porte logique ET 1260 par l'intermédiaire d'un inverseur 1255.

Le circuit 1130 comprend en outre une porte logique ET 1240 ayant une entrée inverseur reliée, de préférence connectée, à la sortie de la porte logique 1235, et une entrée non inverseuse reliée, de préférence connectée, à la sortie de la porte logique 1260.

Un multiplexeur 1270 a une entrée de commande reliée, de préférence connectée, à la sortie de la porte logique ET 1240. Le multiplexeur 1270 a une première entrée (1) reliée, de préférence connectée, à la sortie de la bascule 1215. La première entrée est sélectionnée lorsque la sortie de la porte logique ET 1240 est à un niveau logique haut. Le multiplexeur 1270 a une deuxième entrée (0) reliée, de préférence connectée, à la sortie 1132 du circuit 1130. La deuxième entrée est sélectionnée lorsque la sortie de la porte logique ET 1240 est à un niveau logique bas. Le circuit 1130 comprend en outre une bascule 1275 ayant son entrée D reliée, de préférence connectée, à la sortie du multiplexeur 1270. La sortie Q de la bascule 1275 est reliée, de préférence connectée, à la sortie 1132 du circuit 1130.

De préférence, le circuit 1140 (figure 11) a une entrée reliée, de préférence connectée, à la sortie de la porte logique 1240. En fonctionnement, la porte logique 1240 fournit un signal OKDATA, reçu par le circuit 1140, indiquant au circuit 1140 qu'un bit RBIT est disponible à la sortie 1132 du circuit 1130.

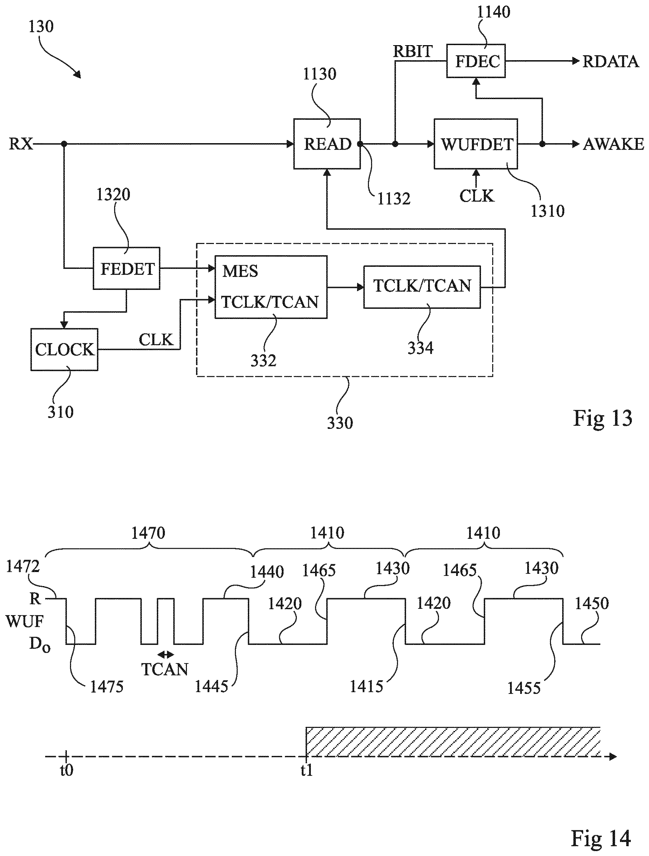

La figure 13 représente, de manière partielle et schématique, un exemple d'un mode de réalisation, selon un deuxième aspect, d'un dispositif 130 constituant un circuit destiné à être relié à un bus CAN.

Le circuit 130 est configuré pour avoir un état de sommeil et un état de réveil. L'état de sommeil est défini par un état dans lequel la consommation électrique par le circuit 130 est relativement faible, et l'état de réveil est défini par un état dans lequel le consommation électrique par le circuit 130 est relativement élevée. L'état de sommeil est obtenu en réduisant l'activité, ou en arrêtant le fonctionnement d'au moins une partie des circuits du dispositif 130. Ceci permet de réduire la consommation électrique par rapport à un dispositif toujours à l'état de réveil.

Le circuit 130 comprend une horloge 310 (CLOCK), similaire à celle décrite en relation avec la figure 4. Selon le présent mode de réalisation, l'horloge est à l'arrêt à l'état de sommeil du dispositif. L'horloge ne produit donc pas de signal CLK, ou le signal CLK reste à un même niveau logique pendant l'état de sommeil.

Le circuit 130 comprend en outre un circuit 1310 (WUFDET) de détection d'une trame de réveil WUP ("wake up frame"). Le circuit 1310 reçoit le signal d'horloge CLK. Le circuit 1310 émet un signal de réveil AWAKE lorsque qu'il a détecté, c'est-à-dire reconnu, la trame de réveil. Le signal de réveil déclenche le passage du dispositif de l'état de sommeil à l'état de réveil.

De préférence, le circuit 1310 a une entrée reliée, de préférence connectée, à la sortie 1132 d'un circuit 1130 (READ), tel que décrit en relation avec la figure 11, qui reçoit le signal RX et fournit les bits RBIT successifs de la trame.

De préférence, le circuit 130 comprend un circuit de détermination d'une valeur de mesure du rapport TCLK/TCAN, selon le premier aspect (figures 3 à 12). La valeur de mesure est de préférence utilisée, de la manière décrite en relation avec le premier aspect, pour recevoir les bits RBIT de la trame. En variante, le circuit 1130 peut utiliser, par exemple sur son entrée 1131 (figure 12), tout signal permettant de définir des instants de réception des bits par le circuit 1130. Dans une autre variante, le circuit 1310 reçoit directement le signal RX et est configuré pour détecter la trame de réveil WUP directement à partir du signal RX. Cependant, par rapport à de telles variantes, l'utilisation de la valeur de mesure du rapport TCLK/TCAN permet de synchroniser la réception de la trame de réveil et améliore sa détection.

Le circuit 130 comprend un circuit 1320 recevant le signal RX. Le circuit 1320 est un circuit de détection de fronts 1320 (FEDET), de préférence de fronts descendants, dans le signal RX. Dans l'exemple représenté, le circuit de détection de front 320 correspond à celui décrit en relation avec la figure 3. De préférence, le circuit de détection de front 1320 permet la détection des fronts sans utiliser le signal CLK de l'horloge, et peut être distinct du circuit 320. Ceci permet de détecter des fronts lorsque le dispositif est à l'état de sommeil. Le circuit 1320 a alors une sortie reliée, de préférence connectée, à une entrée de l'horloge CLK. Lorsqu'un front est détecté, le circuit 1320 envoie à un signal à l'horloge 310, et l'horloge 310 est configurée pour démarrer à la réception de ce signal. Une fois que l'horloge 310 a démarré, le signal CLK est utilisé par le circuit 1310 pour détecter si le front détecté appartient à une trame de réveil. De préférence, le signal CLK est en outre utilisé pour déterminer la valeur de mesure du rapport TCLK/TCAN.

De préférence, le circuit 130 comprend en outre un circuit 1140 (FDEC), tel que décrit en relation avec la figure 11, de décodage des bits RBIT successifs de la trame, pour produire des données. Plus préférentiellement, le circuit 1140 ne fonctionne pas lorsque le dispositif est à l'état de sommeil. Le circuit 1140 reçoit alors le signal de réveil AWAKE, et la réception de ce signal provoque le démarrage du circuit FDEC. Le circuit 130 peut alors envoyer des données. Le présent mode de réalisation est en outre combinable avec les modes de réalisation selon le premier aspect du circuit d'encodage 220 et des circuits 1150 et 1160 (figure 11) d'envoi d'un accusé de réception.

La figure 14 représente, par des chronogrammes schématiques, une étape mode de mise en oeuvre d'un procédé de communication par un bus CAN auquel est relié le dispositif de la figure 13. Les états dominants (Dₒ) et récessifs (R) de la trame de réveil WUP sont représentés en fonction du temps. On a en outre représenté, par des hachures, les instants auxquels l'horloge a démarré et fournit le signal CLK.

La trame WUP est appliquée au bus par un dispositif relié au bus, de préférence le dispositif maître 120. La trame WUP est préférentiellement destinée à déclencher le passage de l'état de sommeil à l'état de réveil de tous les circuits 130 qui sont l'état de sommeil avant l'envoi de la trame. La trame WUP est véhiculée par le bus et parvient aux circuits 130 reliés au bus.

La trame de réveil WUP comprend au moins deux cycles consécutifs 1410 chacun constitué d'un état dominant 1420 suivi d'un état récessif 1430. Par consécutif, on entend qu'un même front 1415 correspond à la fin d'un cycle 1410 et au début du cycle 1410 suivant. Chaque cycle a consécutivement un seul état dominant 1420 et un seul état récessif 1430. Les états récessifs 1430 et dominants 1420 des cycles 1410 ont des durées comprises entre 2 fois la durée TCAN d'un bit de donnée et 5 fois la durée TCAN d'un bit de donnée transporté par le bus série. De préférence, la durée de chacun des états récessifs 1430 et dominants 1420 est supérieure ou égale à 1,8 µs. La durée d'un état dominant correspond au temps entre un front descendant de début de cet état dominant, et un front montant de fin de cet état dominant. De même, la durée d'un état récessif correspond au temps entre un front montant de début cet état récessif, et un front descendant de fin de cet état récessif. Autrement dit, le début du cycle 1410 arrivant en premier dans la trame WUP correspond à un front descendant 1445 de fin d'un état récessif 1440 précédent ce premier cycle. De même, la fin du cycle arrivant en dernier dans la trame correspond à un front descendant 1455 de début d'un état dominant 1450 suivant ce dernier cycle.

De préférence, les états récessifs 1430 et dominants 1420 ont tous la même durée. L'état récessif 1440 peut avoir une durée différente de celle des états récessifs 1430 et dominants 1420 des cycles 1410. L'état dominant 1450 peut avoir une durée différente de celle des états récessifs 1430 et dominants 1420 des cycles 1410.

La trame de réveil WUP forme ainsi au moins trois fronts descendants, à savoir les fronts 1445, 1455, et au moins un front 1415. Ces fronts descendants sont régulièrement alternés avec au moins deux fronts montants 1465 chacun entre les états dominants et récessif d'un des cycles 1410.

De préférence, les cycles 1410 sont précédés d'une période 1470 de transmission de bits de début de la trame, les cycles 1410 étant alors situés dans la trame à des positions de bits de données.

Pendant la période 1470, ou à la fin de celle-ci, la trame WUP comprend au moins un front descendant 1475 suivant un autre état récessif 1472 de la période 1470. Le front descendant 1475 est détecté par le circuit 1320 (figure 13), ce qui déclenche le démarrage de l'horloge 310 à partir d'un instant t0.

En pratique l'horloge 310 met du temps à démarrer. Le signal CLK est fourni par l'horloge 310 seulement à partir d'un instant t1. Le circuit 1310 (figure 12) est en mesure de détecter les états dominants et récessifs de la trame qu'à partir de l'instant t1. L'instant t1 peut être situé après le début des cycles 1410, et le circuit 1310 n'est alors pas en mesure de reconnaître une partie des états récessifs 1430 et dominants 1420 des cycles 1410.

Du fait que la trame comprend plusieurs cycles consécutifs 1410, même si l'instant t1 est situé après le début des cycles 1410, le circuit 1310 peut reconnaître au moins une partie des états dominants 1430 et récessifs 1420 des cycles de la trame, et déclencher le réveil du circuit 130.

On aurait pu penser utiliser une trame comprenant moins d'états récessifs 1430 et/ou dominants 1420. Cependant, pour pouvoir arrêter l'horloge à l'état de sommeil, il aurait fallu prévoir une horloge démarrant avant le début de ces états. En comparaison, la trame de réveil WUP comprenant plusieurs cycles 1410 permet à l'horloge 310 d'être plus simple, et plus simple à fabriquer, par exemple formée dans et sur un substrat semiconducteur. La trame WUP peut comprendre seulement deux cycles 1410. Cependant, en fonction de l'horloge choisie et de son temps de démarrage, on peut préférer que la trame comprenne trois ou plus de trois cycles consécutifs 1410, par exemple quatre ou plus de quatre cycles consécutifs, préférentiellement cinq ou plus de cinq cycles consécutifs.

En outre, dans le cas préféré où le circuit 130 est configuré pour déterminer la valeur de mesure du rapport TCLK/TCAN, la valeur de mesure peut avantageusement être déterminée pendant les cycles 1410 suivant l'instant t1 de début du signal CLK. Le nombre de cycles consécutifs de la trame peut être choisi pour que la détermination de la valeur de mesure puisse être faite entre l'instant t1 et la fin de la trame WUP. Dans le cas plus préférentiel où le circuit 130 comprend un circuit 220 utilisant la valeur de mesure pour envoyer des données, le circuit 130 est, dès la fin de la trame de réveil WUP, avantageusement prêt à envoyer des données synchronisées par rapport à la durée TCAN. Le circuit peut également envoyer un accusé de réception synchronisé de la trame WUP.

Divers modes de réalisation et variantes ont été décrits. L'homme de l'art comprendra que certaines caractéristiques de ces divers modes de réalisation et variantes pourraient être combinées, et d'autres variantes apparaitront à l'homme de l'art.

Enfin, la mise en oeuvre pratique des modes de réalisation et variantes décrits est à la portée de l'homme du métier à partir des indications fonctionnelles données ci-dessus.

## Revendications

1. Procédé de communication par bus série (110), comprenant :
- le transport par le bus série (110) d'une trame (WUP) comprenant au moins deux cycles consécutifs (1410) d'un état dominant (1420) suivi d'un état récessif (1430), lesdits états récessifs (1430) et dominants (1420) ayant des durées comprises entre 2 et 5 fois la durée (TCAN) d'un bit de donnée véhiculé par le bus série, et de préférence supérieures à 1,8 µs ; et
- la détection par un ou plusieurs circuits (130), comprenant chacun une horloge et reliés au bus série (110) d'au moins une partie de ladite trame pour déclencher le passage d'un état de sommeil à un état de réveil du ou desdits circuits (130), le procédé étant **caractérisé en ce que** ladite trame (WUP; comprend au moins un front (1475) mettant fin à un autre état récessif (1472) précédent lesdits états récessifs (1430), et le déclenchement par ledit front (1475) d'un démarrage de ladite horloge (310).

2. Procédé selon la revendication 1, dans lequel, pour le ou chacun desdits circuits (130), ladite horloge (310) est à l'arrêt lorsque le circuit (130) est dans l'état de sommeil.

3. Procédé selon la revendications 1 ou 2, dans lequel lesdits états récessifs (1430) et dominants (1420) ont tous la même durée.

4. Système (100) configuré pour mettre en oeuvre un procédé selon l'une quelconque des revendications 1 à 3.

5. Dispositif (130) destiné à être connecté au bus série (110) d'un système (100) selon la revendication 4 et comprenant ledit ou l'un desdits circuits (130).

6. Dispositif (130) selon la revendication 5 dans sa dépendance à la revendication 2, configuré pour :
- recevoir des fronts transportés par le bus série (110) et séparés par des multiples d'une même durée (TCAN) ;
- déterminer une valeur de mesure (MES ; STEP) d'un rapport (TCLK/TCAN) entre un temps de cycle (TCLK) de l'horloge et ladite même durée (TCAN) ; et
- recevoir des bits sur le bus série (110) en utilisant ladite valeur de mesure (TCLK/TCAN).

7. Dispositif selon la revendication 6, dans lequel la détection d'au moins une partie de ladite trame (WUP) est effectuée à partir desdits bits.

8. Dispositif selon la revendication 6 ou 7, configuré pour envoyer un accusé de réception (ACK) de ladite trame (WUP) en utilisant ladite valeur de mesure (MES ; STEP).

9. Dispositif selon l'une quelconque des revendications 6 à 8, configuré pour envoyer des données sur le bus série (110) en utilisant ladite valeur de mesure (MES ; STEP).

10. Dispositif selon la revendication 9, configuré pour que l'envoi des données soit précédé de la réception des bits.

11. Dispositif selon la revendication 9 ou 10, configuré pour déterminer la valeur de mesure (MES ; STEP) en utilisant une valeur stockée (MES) maintenue fixe pendant l'envoi des données.

12. Dispositif (120) destiné à être connecté au bus série d'un système (100) selon la revendication 4 et configuré pour appliquer ladite trame (WUP) sur le bus série (110).

13. Système (100) selon la revendication 4, comprenant un ou plusieurs premiers dispositifs (130) selon l'une quelconque des revendications 5 à 11 et un deuxième dispositif (120) selon la revendication 12.

14. Système selon la revendication 13, dans lequel le deuxième dispositif (120) est configuré pour envoyer :
- des premiers messages véhiculant un ensemble d'étapes à effectuer par les premiers dispositifs (130) ; et
- des deuxièmes messages adressés à une partie des premiers dispositifs (130), les deuxièmes messages véhiculant des identifiants respectifs des premiers dispositifs (130) auxquels les deuxièmes messages sont adressés, les deuxièmes messages demandant aux premiers dispositifs (130) auxquels les deuxièmes messages sont adressés d'envoyer des réactions respectives au deuxième dispositif (120) dans des intervalles de temps attendus respectifs,
les premiers dispositifs (120) étant configurés pour :
- recevoir les premiers messages, lire l'ensemble d'étapes à effectuer, et mettre en oeuvre des étapes en fonction de l'ensemble lu ; et
- recevoir les deuxièmes messages, et réagir au deuxièmes messages par l'envoi sur le bus, dans les intervalles de temps attendus respectifs, de réactions à destination du deuxième dispositif (120).

## Patentansprüche

1. Verfahren zur Kommunikation über einen seriellen Bus (110), wobei das Verfahren Folgendes aufweist:
- Übertragen eines Rahmens (WUP) durch den seriellen Bus (110), der mindestens zwei aufeinanderfolgende Zyklen (1410) eines dominanten Zustands (1420), gefolgt von einem rezessiven Zustand (1430), aufweist, wobei die rezessiven Zustände (1430) und die dominanten Zustände (1420) Dauern aufweisen, die zwischen dem 2- und 5-fachen der Dauer (TCAN) eines durch den seriellen Bus (110) übertragenen Datenbits und vorzugsweise über 1,8 µs liegen; und
- Erfassen, durch eine oder mehrere Schaltungen (130), die jeweils einen Taktgeber oder Timer aufweisen und mit dem seriellen Bus (110) verbunden sind, von mindestens einem Teil des Rahmens, um den Übergang von einem Schlafzustand in einen Wachzustand der einen oder mehreren Schaltungen (130) auszulösen, wobei das Verfahren **dadurch gekennzeichnet ist, dass** der Rahmen mindestens eine Flanke (1475) aufweist, die einen anderen rezessiven Zustand (1472) beendet, der den rezessiven Zuständen (1430) vorausgeht, und wobei die Flanke (1475) einen Start des Taktgebers oder Timers (310) auslöst.

2. Verfahren nach Anspruch 1, wobei für die Schaltung (130) oder jede der Schaltungen (130) der Taktgeber oder Timer (310) ausgeschaltet ist, wenn sich die Schaltung (130) im Ruhezustand befindet.

3. Verfahren nach Anspruch 1 oder 2, wobei die rezessiven Zustände (1430) und die dominanten Zustände (1420) alle die gleiche Dauer haben.

4. System (100), das zur Durchführung des Verfahrens nach einem der Ansprüche 1 bis 3 konfiguriert ist.

5. Vorrichtung (130), die dazu bestimmt ist, an den seriellen Bus (110) eines Systems (100) nach Anspruch 4 angeschlossen zu werden, und die die genannte oder eine der genannten Schaltungen (130) aufweist.

6. Vorrichtung (130) nach Anspruch 5 in Abhängigkeit von Anspruch 2, welche konfiguriert ist zum:
- Empfangen von Flanken, die über den seriellen Bus (110) übertragen werden und durch Vielfache einer gleichen Dauer (TCAN) getrennt sind;
- Bestimmen eines Messwertes (MES; STEP) eines Verhältnisses (TCLK/TCAN) zwischen einer Zykluszeit (TCLK) des Taktes und der genannten gleichen Dauer (TCAN); und
- Empfangen von Bits auf dem seriellen Bus (110) unter Verwendung des Messwerts (TCLK/TCAN).

7. Vorrichtung nach Anspruch 6, wobei die Erkennung mindestens eines Teils des Rahmens (WUP) auf der Grundlage der Bits durchgeführt wird.

8. Vorrichtung nach Anspruch 6 oder 7, die konfiguriert ist zum Senden einer Empfangsbestätigung (ACK) des Rahmens (WUP) unter Verwendung des Messwerts (MES; STEP).

9. Vorrichtung nach einem der Ansprüche 6 bis 8, die konfiguriert ist zum Senden von Daten auf dem seriellen Bus (110) unter Verwendung des Messwerts (MES; STEP).

10. Vorrichtung nach Anspruch 9, die so konfiguriert ist, dass dem Senden der Daten der Empfang der Bits vorausgeht.

11. Vorrichtung nach Anspruch 9 oder 10, die konfiguriert ist zum Bestimmen des Messwerts (MES; STEP) unter Verwendung eines gespeicherten Wertes (MES), der während des Sendens der Daten festgehalten wird.

12. Vorrichtung (120), die dazu bestimmt ist, an den seriellen Bus eines Systems (100) nach Anspruch 4 angeschlossen zu werden, und die konfiguriert ist zum Anwenden des Rahmens (WUP) auf den seriellen Bus (110).

13. System (100) nach Anspruch 4, das eine oder mehrere Vorrichtungen (130) nach einem der Ansprüche 5 bis 11 und eine Vorrichtung (120) nach Anspruch 12 aufweist.

14. System nach Anspruch 13, wobei die zweite Vorrichtung (120) konfiguriert ist zum Senden von:
- ersten Nachrichten, die einen Satz von Operationen enthalten, die von den ersten Vorrichtungen (130) auszuführen sind; und
- zweiten Nachrichten, die an einen Teil der ersten Vorrichtungen (130) adressiert sind, wobei die zweiten Nachrichten jeweilige Kennungen der ersten Vorrichtungen (130) übermitteln, an die die zweiten Nachrichten jeweils adressiert sind, wobei die zweiten Nachrichten von den ersten Vorrichtungen (130), an die sie adressiert sind, anfordern, jeweilige Reaktionen an die zweite Vorrichtung (120) innerhalb jeweiliger erwarteter Zeitintervalle zu senden,
wobei die ersten Vorrichtungen (130) konfiguriert sind zum:
- Empfangen der ersten Nachrichten, Lesen des Satzes von zu implementierenden Operationen und Implementieren von Operationen in Abhängigkeit von dem gelesenen Satz; und
- Empfangen der zweiten Nachrichten, und Reagieren auf die zweiten Nachrichten durch Senden von Reaktionen an die zweite Vorrichtung (120) innerhalb der jeweiligen erwarteten Zeitintervalle über den Bus.

## Claims

1. A method of communication via serial bus (110), comprising:
- the conveyance by the serial bus (110) of a frame (WUP) comprising at least two consecutive cycles (1410) of a dominant state (1420) followed by a recessive state (1430), said recessive states (1430) and dominant states (1420) having durations comprised between 2 and 5 times the duration (TCAN) of a data bit conveyed by the serial bus (110), and preferably above 1.8 µs; and
- the detection by one or more circuits (130), each comprising a clock and coupled to the serial bus (110) of at least a part of said frame for triggering the passage from a sleep state to a wake state of said one or more circuits (130), the method being **characterized in that** said frame comprises at least one edge (1475) ending another recessive state (1472) preceding said recessive states (1430), and the triggering of a starting of said clock (310) by said edge (1475).

2. The method according to claim 1, wherein, for the circuit (130) or each of said circuits (130), said clock (310) is off when the circuit (130) is in the sleep state.

3. The method according to claim 1 or 2, wherein said recessive states (1430) and dominant states (1420) all have the same duration.

4. A system (100) configured to implement the method according to any of claims 1 to 3.

5. A device (130) intended to be connected to the serial bus (110) of a system (100) according to claim 4 and comprising said or one of said circuits (130).

6. The device (130) according to claim 5 with its dependence on claim 2, configured to:
- receive edges conveyed by the serial bus (110) and separated by multiples of a same duration (TCAN);
- determine a measurement value (MES; STEP) of a ratio (TCLK/TCAN) between a cycle time (TCLK) of the clock and said same duration (TCAN); and
- receive bits on the serial bus (110) using said measurement value (TCLK/TCAN).

7. The device according to claim 6, wherein the detection of at least a part of said frame (WUP) is carried out based on said bits.

8. The device according to claim 6 or 7, configured to send an acknowledgement of receipt (ACK) of said frame (WUP) using said measurement value (MES; STEP).

9. The device according to any of claims 6 to 8, configured to send data on the serial bus (110) using said measurement value (MES; STEP).

10. The device according to claim 9, configured in order that the sending of the data is preceded by the reception of the bits.

11. The device according to claim 9 or 10, configured to determine the measurement value (MES; STEP) using a stored value (MES) kept fixed during the sending of the data.

12. A device (120) intended to be connected to the serial bus of a system (100) according to claim 4 and configured to apply said frame (WUP) on the serial bus (110).

13. A system (100) according to claim 4, comprising one or more devices (130) according to any of claims 5 to 11 and a device (120) according to claim 12.

14. The system of claim 13, wherein the second device (120) is configured to send:
- first messages carrying a set of operations to be implemented by the first devices (130); and
- second messages addressed to a part of the first devices (130), the second messages conveying respective identifiers of the first devices (130) to which the second messages are respectively addressed, the second messages requesting from the first devices (130) to which they are addressed to send respective reactions towards the second device (120) within respective expected time intervals,
the first devices (130) being configured to:
- receive the first messages, read the set of operations to be implemented, and implement operations as a function of the read set; and
- receive the second messages, and react to the second messages by sending, within the respective expected time intervals, reactions towards the second device (120).
